# EUROPEAN PATENT APPLICATION

(11) **EP 3 815 588 A1**
(43) Date of publication of application: **05.05.2021**
(21) Application number: 19205547.3
(22) Date of filing: 28.10.2019
(51) Int. Cl.: A47J 37/07

(54) **RADIATION GRILL APPARATUS**

(71) Applicant: Koninklijke Philips N.V., 5656 AG Eindhoven (NL)
(72) Inventor: GU, Wale, 5656 AE Eindhoven (NL); XIAO, Weimin, 5656 AE Eindhoven (NL)
(74) Representative: Philips Intellectual Property & Standards

(57) **Abstract**

A radiation grill apparatus (10) is disclosed comprising a housing (20) having opposing sides (22, 24) and a food support member (70) on said housing, the housing comprising an infrared radiation source arrangement (30) along one of said opposing sides (22) only and arranged to direct a portion of said infrared radiation onto the food support member such as to create a heat distribution across the food support member; a drip collection member (80) facing the food support member; and a reflector arrangement (100) arranged to redirect a further portion of said infrared radiation onto the food support member such as to improve the homogeneity of said heat distribution, said reflector arrangement comprising a plurality of reflector portions (40, 50, 60) arranged to redirect respective parts (i0, i1, i2, i3) of the further portion of infrared radiation towards different regions of the food support member (70).

## Description

### FIELD OF THE INVENTION

The present invention relates to a radiation grill apparatus comprising a housing having opposing sides and a food support member on said housing, the housing comprising an infrared radiation source arrangement along one of said opposing sides and arranged to direct a portion of said infrared radiation onto the food support member such as to create a heat distribution across the food support member; and a drip collection member facing the food support member.

### BACKGROUND OF THE INVENTION

Food preparation using a radiation grill apparatus is becoming increasingly popular, for example because the indirect transfer of heat to the food support member such as a grill member or the like causes the food on the food support member to be cooked in a more controlled manner, e.g. with reduced risk of burning, smoke generation and so on.

For example, EP 1,444,939 A1 discloses a cooking apparatus capable of effectively utilizing thermal energy of a heating unit to heat food, which includes a cabinet opened at a top surface thereof to provide an opening over which food to be cooked is laid. A grill unit is seated in the opening of the cabinet so as to support the food over the opening. A heating unit is provided in the cabinet so that a front surface thereof faces the grill unit to radiate thermal energy to the grill unit. A plurality of reflecting members are provided at predetermined positions around a rear surface of the heating unit, and are installed to be spaced apart from each other by a predetermined gap to provide an air layer between the reflecting members. The construction of the cooking apparatus allows far infrared rays radiated from a rear surface of the heating unit to be reflected to a front of the heating unit, in addition to preventing heat from being transmitted from the heating unit to a rear portion of the heating unit due to an air layer provided between the reflecting members. Accordingly, most of the thermal energy generated from the heating unit may be used for cooking the food.

However, a drawback with such a cooking apparatus is that when opposing sides, i.e. front and back sides, of the cabinet or housing contain such heating units, e.g. infrared (IR) radiation sources to ensure uniform heating of a food support member such as a grill unit, the user of the apparatus tends to look directly at one of the heating units during use of the apparatus. This causes uncomfortable glare for the user. This may be overcome by providing the user with special glasses to wear, but this requires the user to comply with user instructions, and such compliance cannot be guaranteed, for example because the user dislikes wearing such glasses. Another solution would be to adjust the spectral composition of the radiation sources to reduce the perceived glare, but this may negatively impact the cooking performance of the apparatus, or, in case of the spectral composition shifting into the invisible part of the infrared spectrum, yield a less user-friendly radiation grill apparatus as the heating of the food becomes invisible, which potentially even can be unsafe as overexposure to such infrared radiation cannot be seen.

### SUMMARY OF THE INVENTION

The present invention seeks to provide a radiation grill apparatus according to the opening paragraph in which user glare is reduced without significantly affecting the cooking performance of the radiation grill apparatus.

According to a first aspect, there is provided a radiation grill apparatus comprising a housing having opposing sides and a food support member on said housing, the housing comprising an infrared radiation source arrangement along one of said opposing sides only and arranged to direct a portion of said infrared radiation onto the food support member such as to create a heat distribution across the food support member; a drip collection member facing the food support member; and a reflector arrangement arranged to redirect a further portion of said infrared radiation onto the food support member such as to improve the homogeneity of said heat distribution, said reflector arrangement comprising a plurality of reflector portions arranged to redirect respective parts of the further portion of infrared radiation towards different regions of the food support member.

The provision of an infrared radiation source arrangement along one of the opposing sides only of the housing, typically the side of the housing facing the user when the radiation grill apparatus is in use ensures that the user cannot directly looking at the infrared radiation source arrangement as this arrangement is blocked from view by the housing. In other to compensate for the inhomogeneity in the energy distribution across the food support member resulting from the presence of infrared radiation source arrangement along only one of the opposing sides of the housing, a reflector arrangement comprising a plurality of reflector portions is provided in which different reflector portions redirect incident radiation from the infrared radiation source arrangement towards different portions of the food support member. In this manner, a radiation grill apparatus is provided with comparable cooking characteristics in terms of heat distribution uniformity across the food support member to prior art radiation grill apparatuses having infrared radiation sources on opposing sides of the housing whilst preventing the user of such an apparatus being exposed to glare.

At this point it is noted that although EP 1,444,939 A1 discloses a cooking apparatus with a reflector arrangement comprising a plurality of reflectors, these reflectors are simply arranged to reflect incident light back towards the food support member (here the grill unit) without aiming the reflected light at particular regions of the food support member. In other words, this prior art citation is entirely silent about providing a reflector arrangement for the purpose of improving the homogeneity of the thermal energy distribution across the surface of the food support member.

In an embodiment, the reflector arrangement is dimensioned such that the drip collection member is shielded from direct exposure to the infrared radiation by the reflector arrangement. This has the further advantage that smoke generation caused by overheating of the matter, e.g. oils, collected in the drip tray due to direct exposure to the infrared radiation is prevented, thereby further improving the user friendliness of the radiation grill apparatus. Preferably, the reflector arrangement is dimensioned such that the reflector arrangement does not interfere with the drip collection by said drip collection member as this reduces the amount of cleaning a user has to perform after use of the radiation grill apparatus as such dimensioning ensures that the reflector arrangement is not soiled by fluids dripping from the food during use of the radiation grill apparatus.

In a preferred embodiments, the reflector portions are mathematically discrete portions of a single reflector body, e.g. a reflector body having discrete (discontinuous) surface portions for ease of manufacturing and assembly. Alternatively, The reflector portions may be discrete reflector elements as this facilitates more freedom in aiming of different portions of the infrared radiation to different regions of the food support member at the cost of an apparatus that is more complex to manufacture and assemble. The discrete reflector elements may be spaced apart such as an air gap exists between the discrete reflector elements in order to establish an air flow around the discrete reflector elements in order to prevent their overheating.

In a particular embodiment, the plurality of reflector portions comprises a first parabolic reflector arranged to redirect part of said further portion of infrared radiation towards an end region of the food support member distal to the infrared radiation source arrangement. The use of a parabolic reflector has the advantage that a substantially homogeneous heat distribution can be achieved across the end region of the food support member, i.e. a region distal to the infrared radiation source arrangement.

The first parabolic reflector preferably has a shape defined relative to an axis extending through the infrared radiation source arrangement and an end point of the food support member distal to said infrared radiation source arrangement to achieve such a homogeneous heat distribution.

In an embodiment, this shape obeys the equation y² = 2 p^{∗}x, in which x is the axis extending through the infrared radiation source arrangement and the end point of the food support member distal to said infrared radiation source arrangement, y is an axis perpendicular to said x-axis and p is a constant defining an aperture of the first parabolic reflector. If the parabolic reflector has such a shape a particularly good approximation of a homogeneous heat distribution across the end portion of the food support member is achieved.

The first parabolic reflector preferably is dimensioned such that an end point of the parabolic reflector proximal to the food support member does not block direct illumination by the infrared radiation source arrangement of any part of a major surface of the food support member facing the infrared radiation source arrangement. This ensures optimal efficiency of the infrared radiation source arrangement in heating the food support member.

In the aforementioned particular embodiment, the plurality of reflector portions may further comprise a further parabolic reflector arranged adjacent to an end point of the first parabolic reflector distal to said food support member, said further parabolic reflector being arranged to redirect part of said further portion of infrared radiation towards a central region of the food support member in order to improve the homogeneity of the heating of the food support member by the infrared radiation source arrangement.

The further parabolic reflector may have a shape obeying the equation y'² = 2 p'^{∗}x', in which x' is an axis extending through the infrared radiation source arrangement and a point of minimum intensity of the heat distribution across the food support member produced by the infrared radiation source arrangement and the first parabolic reflector, y' is an axis perpendicular to said x'-axis and p' is a constant defining an aperture of the further parabolic reflector. By aiming the output of the further parabolic reflector at a point of minimum intensity resulting from the combination of thermal energy directly aimed at the food support member by the infrared radiation source arrangement and reflected towards the food support member by the first parabolic reflector, a marked improvement in the homogeneity of the heat distribution across the food support member is achieved.

The further parabolic reflector may be dimensioned such as to block direct illumination of the drip collection member by the infrared radiation source arrangement in order to prevent overheating or burning of the contents of the drip collection member as previously explained.

In an embodiment, the plurality of reflector portions further comprises a planar mirror arranged to redirect part of said further portion of infrared radiation towards an end region of the food support member proximal to the infrared radiation source arrangement to further improve the homogeneity of the heat distribution across the food support member. Such a planar mirror when present may be arranged such that the further parabolic reflector is located in between the first parabolic reflector and the planar mirror.

The infrared radiation source arrangement may comprise one or more discrete infrared radiation sources. The number of discrete infrared radiation sources is typically chosen to ensure that the food support member is exposed to sufficient thermal energy for cooking the food supported thereon.

The housing may comprise a cavity housing the infrared radiation source arrangement and the reflector arrangement arranged around part of said infrared radiation source arrangement. The positioning of the infrared radiation source arrangement in such a cavity further reduces the risk of a user of the radiation grill apparatus being directly exposed to infrared radiation, i.e. to glare.

### BRIEF DESCRIPTION OF THE DRAWINGS

Embodiments of the invention are described in more detail and by way of nonlimiting examples with reference to the accompanying drawings, wherein:
FIG. 1 schematically depicts a radiation grill apparatus according to an embodiment in cross-sectional view;
FIG. 2 schematically depicts a cross-sectional view an aspect of a radiation grill apparatus according to an embodiment in more detail;
FIG. 3 is a graph depicting respective (idealized) light intensity distributions across the food support member of a radiation grill apparatus according to an embodiment;
FIG. 4 schematically depicts a cross-sectional view an aspect of a radiation grill apparatus according to an embodiment in more detail;
FIG. 5 is a graph depicting respective light intensity distributions across the food support member of a radiation grill apparatus as produced by the aspect depicted in FIG. 4;
FIG. 6 schematically depicts a cross-sectional view a further aspect of a radiation grill apparatus according to an embodiment in more detail;
FIG. 7 is a graph depicting respective light intensity distributions across the food support member of a radiation grill apparatus as produced by the further aspect depicted in FIG. 6;
FIG. 8 schematically depicts a cross-sectional view of a radiation grill apparatus according to another embodiment in more detail;
FIG. 9 schematically depicts a cross-sectional view of a light distribution pattern across the across the food support member of a radiation grill apparatus according to said another embodiment; and
FIG. 10 is a graph depicting respective light intensity distributions across the food support member of a radiation grill apparatus depicted in FIG. 8.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

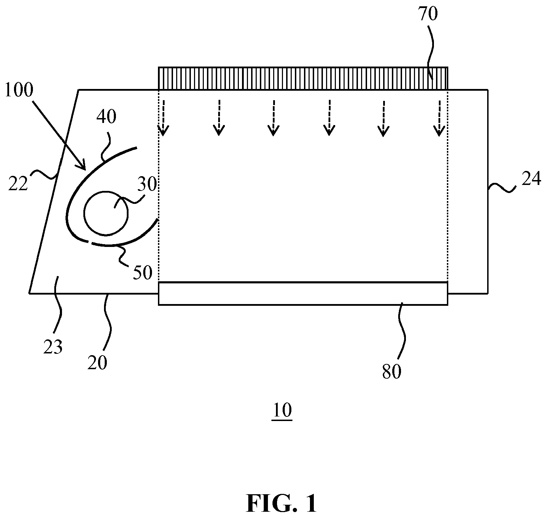

FIG. 1 schematically depicts a cross-sectional view of a radiation grill apparatus 10 according to an embodiment of the present invention. The radiation grill apparatus 10 comprises a housing 20 including opposing sides 22, 24. The housing 20 may comprise a cavity 23 proximal to the first side 22. The housing 20 may be made of any suitable material, e.g. a metal, metal alloy, plastics material or combination thereof. Proximal to the first side 22, e.g. within the cavity 23, the housing 20 contains an infrared radiation source arrangement 30 comprising one or more infrared radiation sources, e.g. one or more infrared lamps. The infrared radiation source arrangement 30 is arranged to directly irradiate a food support member 70 of the opening of the housing 20 in between the opposing sides 22, 24. The food support member 70 may take any suitable shape, e.g. a grill unit or the like comprising a plurality of apertures through which liquids dripping from a food product being cooked on the food support member 70 can be gravity fed as indicated by the dashed arrows into a drip collection member 80 of the radiation grill apparatus 10 opposing the food support member 70. Such a drip collection member 80 may be a drip tray or the like, and preferably is removable from the radiation grill apparatus 10 for cleaning purposes.

The radiation grill apparatus 10 further comprises a reflector arrangement 100 including a plurality of reflector portions 40, 50 in between the infrared radiation source arrangement 30 and the housing 20 such that direct irradiation of the food support member 70 by the infrared radiation source arrangement 30 is not impeded by the reflector arrangement 100. The reflector portions 40, 50 may be made of any suitable material, e.g. a reflective material such as a reflective metal or metal alloy, for example aluminium or steel, or a material carrying a reflective coating, e.g. a glass mirror or the like. The reflector portions 40, 50 preferably form part of a single reflector body for ease of manufacturing and assembly, i.e. are mathematically discrete reflector portions, but alternatively may be physically discrete reflectors, which may be spatially separated from each other and/or from the infrared radiation source arrangement 30 to allow an airflow around the reflector portions 40, 50 to reduce the risk of overheating of the reflector portions 40, 50 by incident infrared radiation from the infrared radiation source arrangement 30. The reflector portions 40, 50 are aimed at different regions of the food support member 70 such as to improve the homogeneity of the heat distribution generated by the infrared radiation source arrangement 30 across the food support member 70.

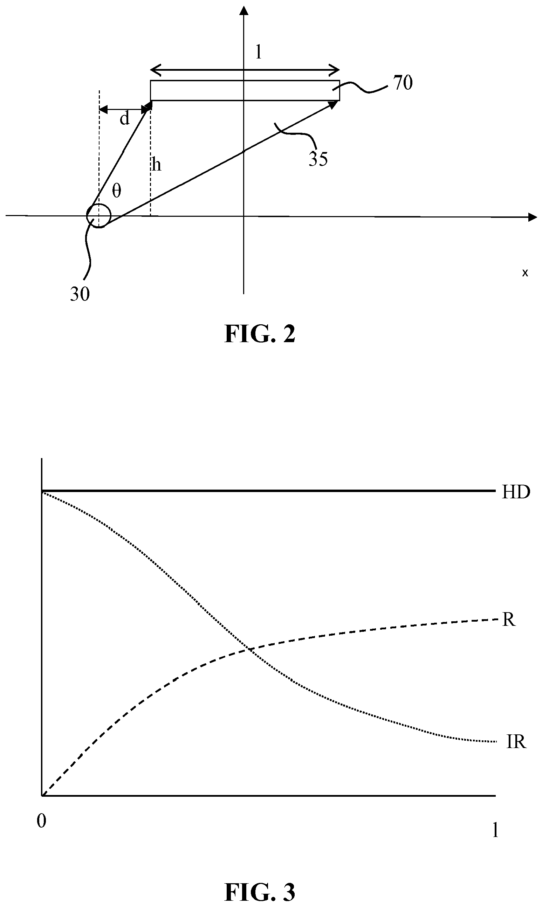

This is explained in further detail with the aid of FIG. 2, which schematically depicts an example positioning of the infrared radiation source arrangement 30 within the radiation grill apparatus 10 at a height h and a distance d from a food support member 70 with length 1, thus causing the food support member 70 to be directly illuminated by the portion 35 of infrared radiation under a range of angles θ. This causes a heat distribution across the food support member 70 as shown by curve IR in FIG. 3, in which the X-axis depicts a length coordinate of the food support member from 0 to 1, in which 0 is the end point of the food support member 70 proximal to the infrared radiation source arrangement 30 and 1 is the opposing end point of the food support member 70 distal to the infrared radiation source arrangement 30. The Y-axis depicts the heat intensity (in arbitrary units). From this curve IR, it can be seen that an infrared radiation source arrangement 30 at a single side only of the housing 20 causes a decrease of heat intensity across the food support member 70 of the radiation grill apparatus 10 with increasing distance from the infrared radiation source arrangement 30.

In order to achieve the ideal (homogeneous) heat distribution HD across the food support member 70, the reflector arrangement 100 must generate a heat distribution across the food support member as symbolized by the curve R, as IR + R = HD. However, in practice it is impossible from an engineering perspective to achieve a reflector producing the heat distribution as symbolized the curve R across the food support member 70. Moreover, providing a single reflector approximating this heat distribution requires a reflector having a complex design, which is also undesirable from an engineering perspective. Therefore, in accordance with the teachings of the present invention, a reflector arrangement 100 is provided comprising multiple reflector portions aimed at different regions of the food support member 70 in order to approximate the curve R, which is easier to design and manufacture.

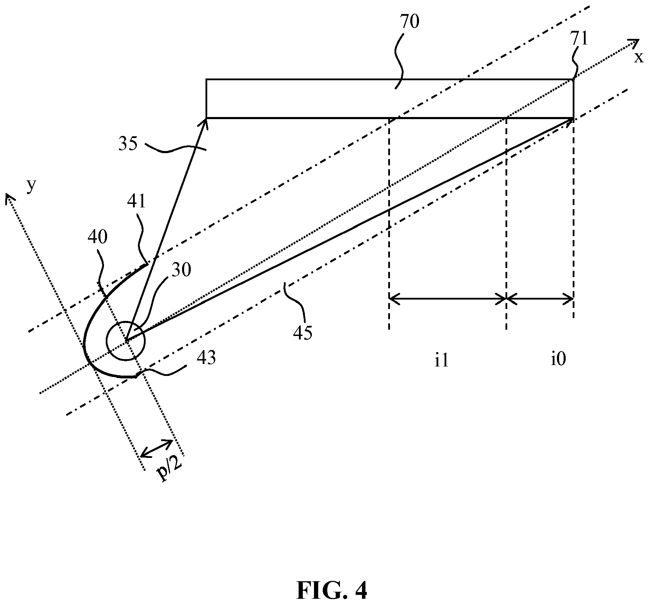

FIG. 4 schematically depicts a cross-sectional view of a part of the reflector arrangement 100 within the radiation grill apparatus 10 for reflecting a part of the infrared radiation generated by the infrared radiation source arrangement 30 that is not directly incident on the food support member 70 towards a region of the food support member 70 in order to improve the homogeneity of the heat distribution across the food support member 70 as generated by the infrared radiation source arrangement 30 at one side of the housing 20 only as previously explained. The reflector arrangement 100 in this embodiment comprises a parabolic reflector 40 obeying the function y² = 2 p^{∗}x, in which x, y are coordinates in a coordinate system defined by an x-axis extending through the centre of the infrared radiation source arrangement 30 and an end point 71 of the food support member distal to the infrared radiation source arrangement 30 and an y-axis arranged perpendicular to the x-axis. The infrared light source arrangement 30 typically is positioned in the focus of the parabolic reflector 40, i.e. at distance p/2 from the vertex of the parabolic reflector. The variable p defines the degree of curvature of the parabolic reflector 40, and may be chosen in a range of 1/8 ^{∗} 1 to 3/8 ^{∗} 1, in which 1 is the width of the food support member 70

The parabolic reflector portion 40 extends between a first point 41 proximal to the food support member 70 and an opposing point 43 distal to the food support member 70. Preferably, the first point 41 is chosen such that the parabolic reflector portion 40 does not extend into the infrared radiation emitted by the infrared radiation source arrangement 30 under the range of angles θ, i.e. the parabolic reflector portion 40 does not block part of the food support member 70 from being directly illuminated by the infrared radiation source 30.

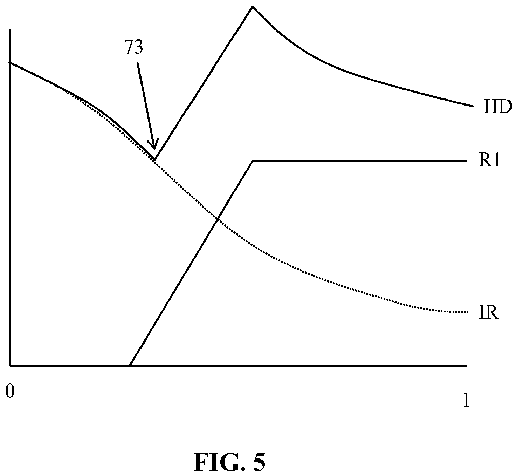

The parabolic reflector portion 40 is arranged to illuminate regions i0 and i1 of the food support member 70 with a portion 45 of infrared radiation originating from the infrared radiation source arrangement 30 as reflected by the parabolic reflector portion 40. This yields an improved heat distribution across the food support member 70 as depicted in FIG. 5, in which HD = IR + R1, with R1 depicting the heat distribution created by the portion 45 of infrared radiation reflected by the parabolic reflector portion 40. As can be seen from the curve HD, this curve now contains a peak in the heat distribution in the centre of the food support member 70. This is acceptable, as most users of the radiation grill apparatus 10 tend to position the food product to be cooked in the centre of the food support member 70, and the central region of the food support member 70 is sufficiently heated by the infrared radiation source arrangement 30 and the reflector arrangement 100 as demonstrated by this spike in the heat distribution across the food support member 70. However, as indicated by the arrow in FIG. 5, this heat distribution still contains a valley at location or point 73 of the food support member 70, which ideally should be compensated for.

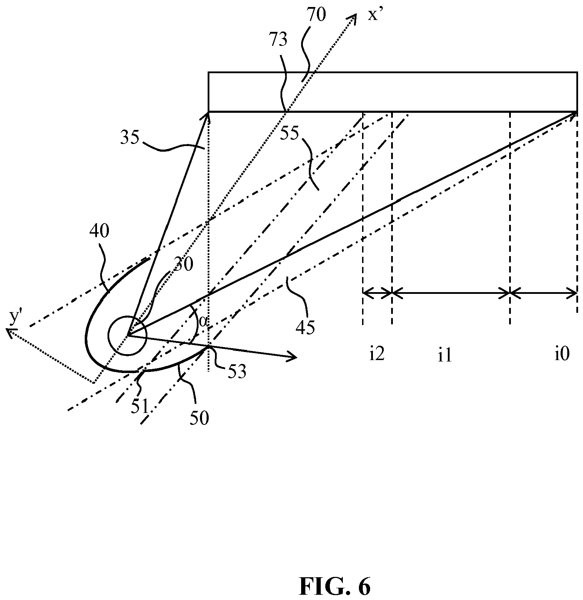

To this end, the reflector arrangement 100 further comprises a further parabolic reflector portion 50 adjacent to the first reflector portion 40 as schematically depicted in FIG. 6. The first parabolic reflector portion 40 and the further parabolic reflective portion 50 preferably form part of a single reflector body but alternatively may be physically discrete reflectors, which may be spatially separated from each other, e.g. by a small air gap, to ensure that air can flow around the respective reflector portions 40, 50 for cooling purposes. Alternatively, the first parabolic reflector portion 40 and the further parabolic reflective portion 50 may be abutting, i.e. end points 43 and 51 coincide. The further parabolic reflector portion 50 obeys the function y'² = 2 p'^{∗}x', in which x', y' are coordinates in a coordinate system defined by an x'-axis extending through the centre of the infrared radiation source arrangement 30 and the intermediate point 73 on the food support member 70 at which the minimum in the heat distribution as generated by the infrared radiation source arrangement 30 and the first parabolic reflector 40 is located and an y'-axis arranged perpendicular to the x'-axis. The infrared radiation source 30 typically is positioned at a distance p'/2 from the vertex of the further parabolic reflector portion 50, i.e. in the focus of this reflector portion. The variable p' defines the degree of curvature of the further parabolic reflector 50, and may be chosen in a range of p' = 1/8 ^{∗} 1 to 3/8 ^{∗} 1, in which 1 is the width of the food support member 70.

The further parabolic reflector portion 50 extends between a first point 51 proximal to the food support member 70 and an opposing point 53 distal to the food support member 70. Preferably, the second point 53 is chosen such that the further parabolic reflector portion 40 does not extend into the infrared radiation emitted by the infrared radiation source arrangement 30 under the range of angles θ, i.e. the further parabolic reflector portion 50 does not block part of the food support member 70 from being directly illuminated by the infrared radiation source 30. More preferably, the second point 53 is chosen such that the further parabolic reflector portion 50 does not extend into the drip path between the food support member 70 and the drip collection member 80, thus avoiding excessive soiling of the further parabolic reflector portion 50 by such drips. The further parabolic reflector portion 50 may be dimensioned such that direct illumination of the contents of the drip collection member 80 by the infrared radiation source arrangement 30, i.e. light emitted beyond the range of angles α, is prevented. In other words, the light emitted under the range of angles α is not directly incident on the drip collection member 80.

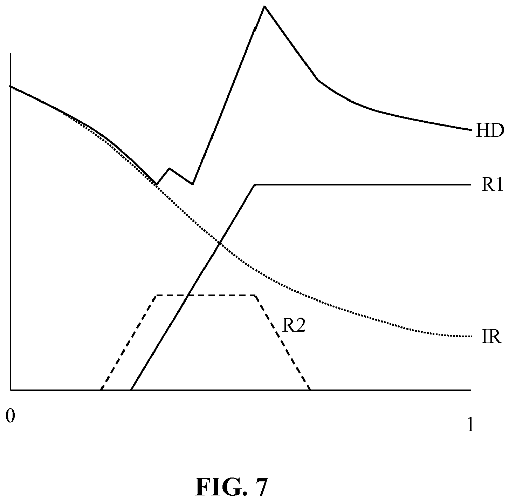

The further parabolic reflector portion 50 is arranged to illuminate region i2 of the food support member 70 around the intermediate point 73 with a portion 55 of infrared radiation originating from the infrared radiation source arrangement 30 as reflected by the further parabolic reflector portion 50. This yields an improved heat distribution across the food support member 70 as depicted in FIG. 7, in which HD = IR + R1 +R2, with R2 depicting the heat distribution across the region i2 of the food support member 70 as created by the portion 55 of infrared radiation reflected by the further parabolic reflector portion 50. The further parabolic reflector portion 50 generates an almost uniform heat distribution around the valley position 73 in the heat distribution generated by IR + R1 as previously explained, thereby further improving the approximation of the homogeneity of the heat distribution across the food support member 70. In fact, the reflector arrangement 100 consisting of the first parabolic reflector portion 40 and the further parabolic reflector portion 50 was found to provide a satisfactory heat distribution across the entirety of the food support member 70.

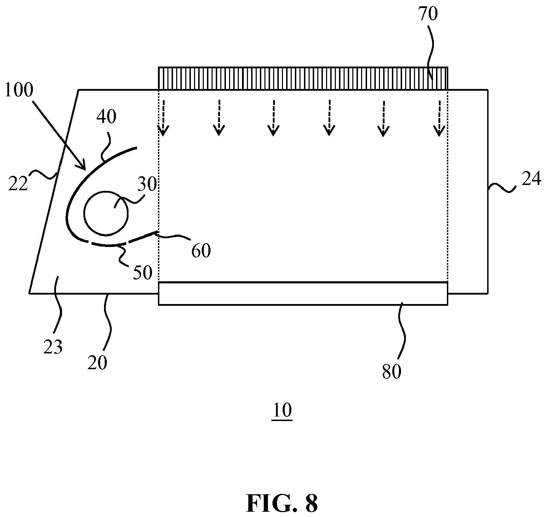

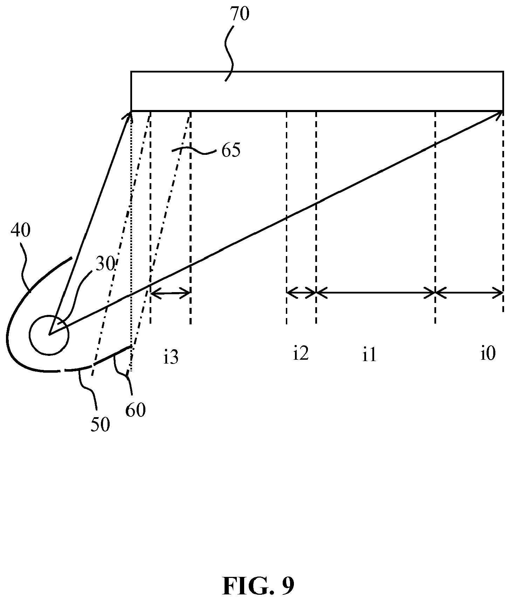

Nevertheless, in a further embodiment as schematically depicted in FIG. 8, the reflector arrangement 100 further comprises a planar reflector portion 60, e.g. a planar mirror or the like to further improve the homogeneity of the heat distribution across the food support member 70, in particular across a region i3 of the food support member 70 proximal radiation source arrangement 30, as schematically depicted in FIG. 9, in which it can be seen that a portion 65 of infrared radiation as generated with the infrared radiation source arrangement 30 is reflected by the planar reflector portion 60 towards the region i3 of the food supporting member 70. As previously explained, the planar reflector portion 60 preferably forms part of a single reflector body further including the first parabolic reflector 40 and the second parabolic reflector 50, although alternatively the planar reflector portion 60 may be a physically discrete reflector, which (optionally) may be spatially separated from the second parabolic reflector 50. The planar reflector portion 60 is typically arranged such that the further parabolic reflector portion 50 is positioned in between the first parabolic reflector portion 40 and the planar reflector portion 60. Preferably, the planar reflector portion 60 is dimensioned such that the planar reflector portion 60 does not interfere with the drip path between the food support member 70 and the drip collection member 80 of the radiation grill apparatus 10 to prevent excessive soiling of the planar reflector portion 60. As will be readily understood by the skilled person, this means that in this embodiment the further parabolic reflector portion 50 may be smaller, i.e. having a shorter length between its end points 51 and 53, compared to the embodiment schematically depicted in FIG. 7.

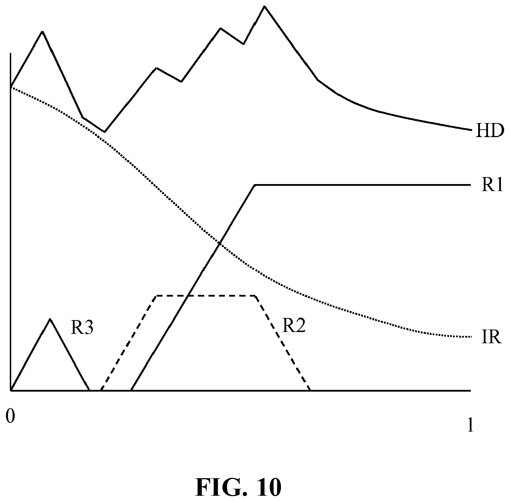

The resulting heat distribution across the food support member 70 is schematically depicted in FIG. 10, in which HD = IR + R1 + R2 + R3, with R3 depicting the heat distribution across the region i3 of the food support 70 as generated with the planar reflector member 60. Consequently, a heat distribution across the food support member 70 is achieved by the combination of the reflector arrangement 100 and the infrared radiation source arrangement 30 that has a markedly improved homogeneity compared to a heat distribution across the full support member 70 achieved by the infrared radiation source arrangement 30 in isolation.

Hence, embodiments of the present invention disclose a radiation grill apparatus 10 comprising an infrared radiation source arrangement 30 on one side only of the housing 20 of the radiation grill apparatus 10, in which a reflector arrangement 100 comprising a combination of parabolic reflector portions and/or planar reflector portions is positioned around a part of the infrared radiation source arrangement 30 to improve the homogeneity of the heat distribution across the food support member 70 of the radiation grill apparatus 10. The different reflector portions preferably combine to form a single reflector body having different portions or regions defined by different mathematical functions (e.g. the body cannot be described using a single or continuous mathematical function) or may be provided as physically discrete reflectors. It should be understood that embodiments of the present invention are not limited to the example embodiments disclosed in the present application; any suitable combination of parabolic reflector portions and/or planar reflector portions may be used to improve such homogeneity in the heat distribution across the food support member 70.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A radiation grill apparatus (10) comprising a housing (20) having opposing sides (22, 24) and a food support member (70) on said housing, the housing comprising:
an infrared radiation source arrangement (30) along one of said opposing sides (22) only and arranged to direct a portion of said infrared radiation onto the food support member such as to create a heat distribution across the food support member;
a drip collection member (80) facing the food support member; and
a reflector arrangement (100) arranged to redirect a further portion of said infrared radiation onto the food support member such as to improve the homogeneity of said heat distribution, said reflector arrangement comprising a plurality of reflector portions (40, 50, 60) arranged to redirect respective parts (i0, i1, i2, i3) of the further portion of infrared radiation towards different regions of the food support member (70).

2. The radiation grill apparatus (10) of claim 1, wherein the reflector arrangement (100) is dimensioned such that the drip collection member is shielded from direct exposure to the infrared radiation by the reflector arrangement.

3. The radiation grill apparatus (10) of claim 1 or 2, wherein the reflector arrangement (100) is dimensioned such that the reflector arrangement does not interfere with the drip collection by said drip collection member (80).

4. The radiation grill apparatus (10) of any of claims 1-3, wherein the reflector portions (40, 50, 60) are discrete reflector elements.

5. The radiation grill apparatus (10) of any of claims 1-4, wherein the plurality of reflector portions comprises a first parabolic reflector (40) arranged to redirect part (45) of said further portion of infrared radiation towards an end region (i0, i1) of the food support member (70) distal to the infrared radiation source arrangement (30).

6. The radiation grill apparatus (10) of claim 5, wherein the first parabolic reflector (40) has a shape defined relative to an axis extending through the infrared radiation source arrangement (30) and an end point (71) of the food support member (70) distal to said infrared radiation source arrangement.

7. The radiation grill apparatus (10) of claim 6, wherein said shape obeys the equation y² = 2 p^{∗}x, in which x is the axis extending through the infrared radiation source arrangement (30) and the end point (71) of the food support member (70) distal to said infrared radiation source arrangement, y is an axis perpendicular to said x-axis and p is a constant defining an aperture of the first parabolic reflector (40).

8. The radiation grill apparatus (10) of any of claims 5-7, wherein the first parabolic reflector (40) is dimensioned such that an end point (41) of the parabolic reflector proximal to the food support member (70) does not block direct illumination by the infrared radiation source arrangement (30) of any part of a major surface of the food support member facing the infrared radiation source arrangement.

9. The radiation grill apparatus (10) of any of claims 1-8, wherein the plurality of reflector portions further comprises a further parabolic reflector (50) arranged adjacent to an end point (43) of the first parabolic reflector (40) distal to said food support member (70), said further parabolic reflector being arranged to redirect part (55) of said further portion of infrared radiation towards a central region (i2) of the food support member.

10. The radiation grill apparatus (10) of claim 9, wherein the further parabolic reflector (50) has a shape obeying the equation y'² = 2 p'^{∗}x', in which x' is an axis extending through the infrared radiation source arrangement (30) and a point (73) of minimum intensity of the heat distribution across the food support member (70) produced by the infrared radiation source arrangement (30) and the first parabolic reflector (40), y' is an axis perpendicular to said x'-axis and p' is a constant defining an aperture of the further parabolic reflector.

11. The radiation grill apparatus (10) of claim 9 or 10, wherein the further parabolic reflector (50) is dimensioned such as to block direct illumination of the drip collection member (80) by the infrared radiation source arrangement (30).

12. The radiation grill apparatus (10) according to any of claims 9-11, wherein the plurality of reflector portions further comprises a planar mirror (60) arranged to redirect part (65) of said further portion of infrared radiation towards an end region (i3) of the food support member (70) proximal to the infrared radiation source arrangement (30).

13. The radiation grill apparatus (10) of claim 12, wherein the planar mirror (60) is arranged such that the further parabolic reflector (50) is located in between the first parabolic reflector (40) and the planar mirror.

14. The radiation grill apparatus (10) of any of claims 1-13, wherein the infrared radiation source arrangement (30) comprises one or more discrete infrared radiation sources.

15. The radiation grill apparatus (10) of any of claims 1-14, wherein the housing (20) comprises a cavity (23) housing the infrared radiation source arrangement (30) and the reflector arrangement (100) arranged around part of said infrared radiation source arrangement (30).
